Europäisches Patentamt

European Patent Office

Office européen des brevets

(11) Veröffentlichungsnummer: **0 454 937 A1**

## (12) EUROPÄISCHE PATENTANMELDUNG

(21) Anmeldenummer: 90890133.3

(22) Anmeldetag: 02.05.90

(51) Int. Cl.5: **B01D 53/36**

(43) Veröffentlichungstag der Anmeldung:
06.11.91 Patentblatt 91/45

(84) Benannte Vertragsstaaten:
AT BE CH DE DK ES FR GB GR IT LI LU NL SE

(71) Anmelder: **Krassnigg, Franz, Dr.**
**Käferheimstrasse 43**
**A-5071 Wals(AT)**

Anmelder: **Lüftenegger, Ferdinand**
**Andrä Blümlstrasse 22**
**A-5020 Salzburg(AT)**

Anmelder: **Spitzy, Miguel**
**Hintertal 19**
**A-5761 Maria Alm(AT)**

(72) Erfinder: **Krassnigg, Franz, Dr.**
**Käferheimstrasse 43**
**A-5071 Wals(AT)**
Erfinder: **Lüftenegger, Ferdinand**
**Andrä Blümlstrasse 22**
**A-5020 Salzburg(AT)**
Erfinder: **Spitzy, Miguel**
**Hintertal 19**
**A-5761 Maria Alm(AT)**

(74) Vertreter: **Collin, Hans, Dipl.-Ing. Dr. et al**
**Patentanwälte Dipl.-Ing. Dr. Hans Collin**
**Dipl.-Ing. Erwin Buresch Dipl.-Ing.Armin**
**Häupl Mariahilferstrasse 50**
**A-1070 Wien(AT)**

(54) **Kombinationsfilter für zumindest im wesentlichen gasförmige Medien sowie dessen Verwendung.**

(57) Die Erfindung betrifft ein Kombinationsfilter für zumindest im wesentlichen gasförmige Medien, bestehend aus einer Eingangsstufe zur Abtrennung von festen, flüssigen und/oder dampfförmigen Bestandteilen und einer nachgeordneten Katalysatorstufe zur chemischen Umwandlung von Gasbestandteilen, wobei die Katalysatorstufe mit einem Schallgeber, insbesondere einem Ultraschallgeber, gekoppelt ist.

EP 0 454 937 A1

Die Erfindung betrifft ein Kombinationsfilter für zumindest im wesentlichen gasförmige Medien, bestehend aus einer Eingangsstufe zur Abtrennung von festen, flüssigen und/oder dampfförmigen Bestandteilen und einer nachgeordneten Katalysatorstufe zur chemischen Umwandlung von Gasbestandteilen.

Es ist grundsätzlich bekannt, aus im wesentlichen gasförmigen Medien, die an die Umgebungsatmosphäre abgegeben oder aus ihr entnommen werden sollen, feste und/oder flüssige Bestandteile auszufiltern.

So betrifft z.B. die DE-OS 36 08 635 einen Motorenabgas-Hochtemperaturreaktor mit einem mit einem feuerfesten Trägermaterial aus offenporigem Keramikschaum in Form hintereinander angeordneter Platten, wobei mindestens zwei dieser Platten eine Katalysatorschicht tragen und ein- und ausgangsseitig unbeschichtete Keramikplatten als Filter angeordnet sein können. Der Reaktor kann zweistufig ausgeführt sein, wobei in der ersten Stufe eine reduzierende und in der zweiten Stufe eine oxidierende Behandlung vorgesehen ist. Für die reduzierende Behandlung sind als Katalysatoren Oxide von Fe, Co, Ni, Ti, V, Cr, Mo, W und/oder Mn vorgesehen, für die oxidierende Behandlung Oxide von Cu, Cr, Mo, W, Mn, V und/oder Fe; Edelmetallkatalysatoren sind nicht vorgesehen.

Die DE-OS 37 21 725 betrifft eine Vorrichtung zur Reinigung der Abgase von Heizungsanlagen, mit einer stromaufwärts gelegenen Filtereinrichtung und einer stromabwärts gelegenen Katalysatoreinrichtung. Als Katalysatormaterialien werden modifizierte, insbesondere metalldotierte Alumosilikate eingesetzt.

Die US-PS 4 572 178 beschreibt eine Gasmaskenfilterpatrone, in der in Durchströmungsrichtung in der Reihenfolge ein Trocknungsmittel (Zeolith), ein Rauchfilter, ein Adsorbens (aktivierte Carbonfasern oder Aktivkohle) und ein Oxydationskatalysator für CO (Hopkalite) angeordnet ist. Hopkalite besteht aus 22 Masse-% CuO und 78 Masse-% $MnO_2$.

Mechanische Filter, wie Schlauchfilter, Elektrofilter, Sackfilter haben großtechnische Anwendung gefunden, um Stäube abzutrennen.

Flüssige Bestandteile und Dämpfe werden z.B. über Adsorber abgetrennt.

In letzter Zeit besteht immer mehr das Problem, nicht nur Abgase selbst, wie z.B. Verbrennungsabgase, sondern auch Ab- oder Zuluft zu reinigen.

Das bezieht sich nicht nur auf die Ansaugluft für Verbrennungskraftmaschinen, die seit langem über Papierfiltereinsätze von Feststoffen befreit wird, sondern auf die Zuluft zu örtlich begrenzten Aufenthaltsräumen, z.B. die Zuluft zu Bergbaubetrieben, Schutzräumen, Gebäuden, wie Büros, Wohnanlagen, Krankenanstalten, Schulen, Fluggastabfertigungshallen, Innenräumen von Verkehrsmitteln wie Fahrzeugen und Flugzeugen etc. sowie z.B. die Abluft von Straßentunnels.

Die Abluft von Straßentunnels wird üblicherweise über Entlüftungsschächte abgezogen und bietet dort die Möglichkeit einer Reinigung vor dem Austritt in die Umgebungsluft. Sie enthält in wechselnden Konzentrationen feste Schadstoffe wie insbesondere Bremsbelagabrieb, Reifenabrieb, Fahrbahnabrieb, Schwermetallverbindungen und Ruß, flüssige Schadstoffe wie Ölnebel und gasförmige Schadstoffe wie unverbrannte Kraftstoffe sowie typische Verbrennungsnebenprodukte wie CO und $NO_x$.

Es besteht somit der Bedarf nach Filtern, die imstande sind, örtlich aus im wesentlichen gasförmigen Medien zum oben angegebenen Zweck sämtliche Fremdstoffe, insbesondere Schadstoffe, möglichst weitgehend zu entfernen.

Erfindungsgemäß vorgeschlagen wird zur Lösung dieser Aufgabe ein Kombinationsfilter für zumindest im wesentlichen gasförmige Medien, bestehend aus einer Eingangsstufe zur Abtrennung von festen, flüssigen und/oder dampfförmigen Bestandteilen und einer nachgeordneten, vorzugsweise beheizten, Katalysatorstufe zur chemischen Umwandlung von Gasbestandteilen. Die Eingangsstufe dient dabei insbesondere auch der Fernhaltung von Feuchtigkeit von der Katalysatorstufe. Dieses Filter ist vor allem dadurch gekennzeichnet, daß die Katalysatorstufe mit einem Schallgeber, insbesondere einem Ultraschallgeber, gekoppelt ist.

Insbesondere sind dabei in der Katalysatorstufe Oxide der Übergangsmetalle, insbesondere Oxide von Mn und/oder Cu, und/oder Metalle aus der Gruppe der Platinmetalle, als Katalysator und/oder Katalysatorbestandteil vorgesehen. Die Katalysatorstufe kann das Katalysatormaterial z.B. als Bett oder auf einem Träger enthalten.

Für größere erfindungsgemäße Kombinationsfiltereinheiten, insbesondere für solche, die stationär angeordnet sind, kann es vorteilhaft sein, sie für einen Taktbetrieb auszubilden, d.h. die Eingangs- und/oder Katalysatorstufe in Form mindestens zweier, wechselweise zuschaltbarer Einheiten vorzusehen. Dabei kann ausreichen, zumindest zwei wechselweise einschaltbare Eingangsstufen vorzusehen, während lediglich eine Katalysatorstufe vorgesehen werden muß. In diesem Fall kann die jeweils verbrauchte Eingangsstufe, d.h. eine Eingangsstufe, deren zulässiger Beladungsgrad erreicht ist, einfach ausgetauscht werden; vorzugsweise wird jedoch eine Vorrichtung zum Regenerieren der jeweils außer Filterbetrieb stehenden Einheit der Eingangs-und/oder Filterstufe durch Hindurchleiten von insbesondere gasförmigen Spülmedien, insbesondere im Gegenstrom zur Filtrationsrichtung, vorgesehen, insbesondere um Feststoffe und Flüssigkeiten auszuwaschen und/oder auszublasen, z.B. um die Eingangsstufe zu trocknen.

Die Vorrichtung weist den Schallgeber, insbesondere einen Ultraschallgeber unter anderem zur Unterstützung des Spülvorganges auf und weiterhin kann eine Heizeinrichtung, wie z.B. ein Mikrowellengenerator insbesondere zum Aufheizen von Spülmedium und/oder zum Beheizen der Eingangsstufe vorgesehen sein.

Bevorzugt wird weiterhin, daß in der Eingangsstufe auf eine Feststoffilterschicht aus Fasermaterial, insbesondere in Form einer textilartigen oder vliesartigen Schicht, an die gegebenenfalls eine elektrische Spannung angelegt wird, eine wasserbindende, insbesondere hygroskopische Schicht, vorzugsweise aus Silikagel bzw. quellbaren Tonmineralien, folgt.

Der Eingangs- und/oder der Katalysatorstufe kann vorteilhaft ein Mediumverdichter vorgeschaltet sein, um den Wirkungsgrad zu erhöhen. Beim Einsatz als Frischluftfilter in Kraftfahrzeugen kann dieser Mediumverdichter günstig von einem Abgasturbolader angetrieben sein.

Für kleinere Einheiten werden Kombinationsfilterpatronen bevorzugt, die insbesondere in Eingangsstufe und Katalysatorstufe geteilt sind, wobei die einzelnen Stufen zusammengesetzt, z.B. zusammengeschraubt, werden und voneinander trennbar sind.

Diese Ausführungsform ist insbesondere vorgesehen für Frischluftzuführungen zu den Aufenthaltsräumen von Fahrzeugen und Flugzeugen.

Vorteilhaft ist dabei die Filterpatrone in einer mit einem Gebläse versehenen Bypaßleitung der Frischluftzuführung angeordnet und wird nur im Bedarfsfall, z.B. in Stau oder in Tunnels, eingeschaltet, während die direkte Frischluftzufuhr unterbrochen wird. Es kann z.B. auch Frischluft oder Warmluft im Gegenstrom durch eine zu regenerierende Filterpatrone geblasen oder gesaugt werden, um die Eingangsstufe bzw. die Katalysatorstufe zu regenerieren, z.B. um die Eingangsstufe zu trocknen. Unter Regenerieren wird hier in üblicher Weise die Wiederherstellung der möglichst ursprünglichen Wirksamkeit der einzelnen Elemente des Kombinationsfilters verstanden.

Ein erfindungsgemäßes Filter für stationären Betrieb und großen Durchsatz weist z.B. am Eintritt der Eintrittsstufe Prallbleche od.dgl. auf, die auch feuchtgehalten und von Zeit zu Zeit gereinigt werden können. Dann folgt ein Staubfilter, das z.B. als Sackfilter ausgebildet ist und anschließend gegebenenfalls eine Feuchtigkeitsadsorberschicht. Dann folgt die Katalysatorstufe. Alle einzelnen Elemente sind vorzugsweise einzeln zugänglich sowie zum Taktbetrieb jeweils doppelt vorhanden, wobei die jeweils verbrauchten Elemente in üblicher Weise chemisch, mechanisch und/oder thermisch regeneriert bzw. ausgetauscht werden. Selbstverständlich erfolgt bei großen Einheiten die Steuerung und Überwachung des Betriebes automatisch, gegebenenfalls auch unter Einbindung in Luftzusammensetzungswarnsysteme.

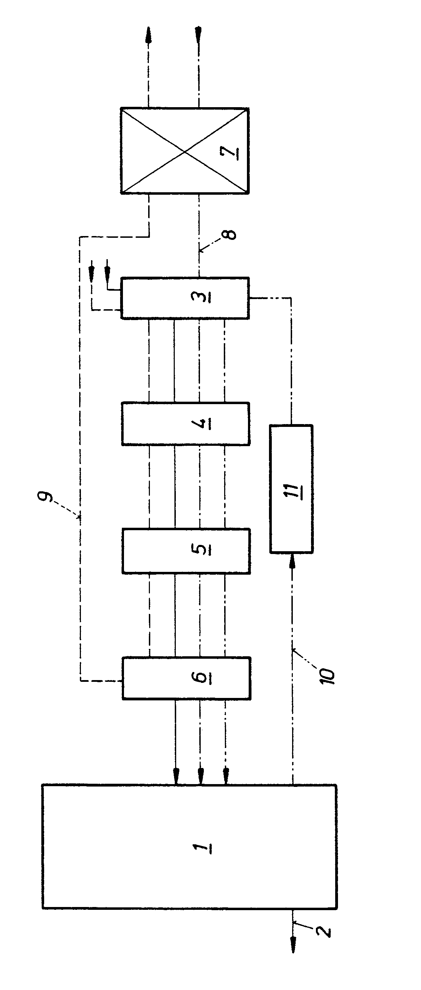

Die Erfindung wird nachstehend an Hand eines Ausführungsbeispiels unter Bezugnahme auf die Zeichnung näher beschrieben, in der ein Blockschema einer Raumbelüftungsanlage dargestellt ist, die z.B. für ein Kraftfahrzeug Verwendung finden kann.

Der Raum 1 ist über eine stets offene Entlüftung 2 mit der Umwelt verbunden. Die Luftzufuhr zum Raum 1 erfolgt in Strömungsrichtung gesehen über ein Dreiwegventil 3, ein Gebläse 4, einen Wärmetauscher 5 (Heizung, Kühlung) und eine Umschaltklappe 6.

Dem Dreiwegventil 3 ist ein erfindungsgemäßes Kombinationsfilter 7 vorgeschaltet, das über eine Filterluftzuführleitung 8 mit dem Dreiwegventil 3 und über eine Frischluftrückführleitung 9 mit der Umschaltklappe 6 verbunden ist.

Weiterhin steht der Raum 1 über eine Umluftleitung 10, in der eine Drosselklappe 11 angeordnet ist, mit dem Dreiwegventil 3 in Verbindung.

Wird im Raum 1 keine Filterluft benötigt, wird das Dreiwegventil so gestellt, daß die Verbindung zwischen dem Ventil 3, der Atmosphäre, der Umluftleitung 10 und dem Gebläse 4 hergestellt ist. Die Umschaltklappe 6 befindet sich in der Stellung, wo die Verbindung zwischen Gebläse 4 und Raum 1 offen ist. Über das Gebläse 4 wird nun Frischluft über das Ventil 3 angesaugt und dem Raum 1 zugeführt, wobei sie entsprechend geheizt oder gekühlt wird. Je nach Stellung der Drosselklappe 11 kann über die Leitung 10 auch zusätzlich eine dosierbare Menge Umluft angesaugt werden.

Wird im Raum 1 Filterluft benötigt, wird das Dreiwegventil 3 so gestellt, daß die Verbindung zwischen dem Ventil 3, dem Filter 7, der Umluftleitung 10 und dem Gebläse 4 hergestellt ist. Die Umschaltklappe 6 befindet sich in der Stellung, wo die Verbindung zwischen Gebläse 4 und Raum 1 offen ist. Der Betrieb der Anlage mit Filterluft ist gegenüber dem mit Frischluft unverändert; wiederum kann Umluft zudosiert werden.

Zum Rückspülen = Regenerieren des Filters 7 wird mittels der Umschaltklappe 6 die Verbindung zum Raum 1 unterbrochen und die Verbindung zur Leitung 9 hergestellt. Vom Gebläse 4 angesaugte Frischluft wird somit im Gegenstrom durch das Filter 7 geblasen, wobei dabei der Wärmetauscher 5 vorzugsweise auf Heizen gestellt wird, so daß mit Heißluft gespült wird.

In der Zeichnung ist die Frischluftführung voll, die Spülluftführung gestrichelt, die Filterluftführung strichpunktiert und die Umluftführung strichpunktiert mit zwei Punkten dargestellt.

Das erfindungsgemäße Kombinationsfilter ist zumindest im wesentlichen ein Trockenfilter, in dem die einzelnen Schichten vorzugsweise räumlich voneinander getrennt vorliegen. Insbesondere werden als Feststoffilterschichten vliesartige bzw. textilartige Materialien, z.B. aus Glasfasern, eingesetzt, wobei auch elektrische Spannung angelegt werden kann. Zur Entfernung von Wasser aus dem zu filternden Gasstrom können in der Eingangsstufe hygroskopische Substanzen, z.B. Silikagel, oder wasseraufnahmefähige Substanzen, z.B. Tonmineralien, die unter Aufquellen Wasser binden, eingesetzt werden.

## Patentansprüche

1. Kombinationsfilter für zumindest im wesentlichen gasförmige Medien, bestehend aus einer Eingangsstufe zur Abtrennung von festen, flüssigen und/oder dampfförmigen Bestandteilen und einer nachgeordneten Katalysatorstufe zur chemischen Umwandlung von Gasbestandteilen, dadurch gekennzeichnet, daß die Katalysatorstufe mit einem Schallgeber, insbesondere einem Ultraschallgeber, gekoppelt ist.

2. Filter nach Anspruch 1, dadurch gekennzeichnet, daß die Katalysatorstufe mit einer Heizeinrichtung, insbesondere einem Mikrowellengenerator, gekoppelt ist.

3. Filter nach Anspruch 1 oder 2, dadurch gekennzeichnet, daß in der Katalysatorstufe in Durchströmungsrichtung zuerst eine Zone mit Oxiden der Übergangsmetalle, insbesondere Oxiden von Mn und/oder Cu, und anschließend eine Zone mit mindestens einem Metall aus der Gruppe der Platinmetalle vorgesehen ist.

4. Filter nach einem der Ansprüche 1 bis 3, dadurch gekennzeichnet, daß in der Eingangsstufe auf eine Feststoffilterschicht aus Fasermaterial, insbesondere in Form einer textilartigen oder vliesartigen Schicht, an die gegebenenfalls eine elektrische Spannung angelegt wird, eine wasserbindende, insbesondere hygroskopische Schicht, vorzugsweise aus Silikagel bzw. quellbaren Tonmineralien, folgt.

5. Filter nach einem der Ansprüche 1 bis 4, dadurch gekennzeichnet, daß der Eingangs- und/oder der Katalysatorstufe ein Mediumverdichter vorgeschaltet ist.

6. Verwendung eines Kombinationsfilters nach einem der Ansprüche 1 bis 5 als mobile oder stationäre Einrichtung in Tunnels, Stollen und/oder Schächten als Abluft- und/oder Zuluftfilter, in der Zuluftführung zu Aufenthaltsräumen, wie Innenräumen von Gebäuden und Verkehrsmitteln wie Kraftfahrzeuge, Züge, Schiffe oder Flugzeuge, sowie Schutzräumen, und/oder zur Entsorgung von Abgasen aus Verbrennungsanlagen und/oder Verbrennungskraftmaschinen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A,D | DE-A-3721725 (W. DOERENKAEMPER) <br> * Anspruch 1 * <br> --- | 1, 6 | B01D53/36 |
| A | EP-A-176295 (R. MUNDT) <br> * Ansprüche 1, 13 * <br> --- | 1, 2 | |
| A | DE-C-894552 (SIEMENS-SCHUCKERTWERKE) <br> * das ganze Dokument * <br> --- | 1 | |
| A | US-A-4076606 (S. SUZUKI ET AL.) <br> * Anspruch 1 * <br> ----- | 1 | |
| | | | RECHERCHIERTE SACHGEBIETE (Int. Cl.5 ) <br><br> B01D <br> B01J |

Der vorliegende Recherchenbericht wurde für alle Patentansprüche erstellt

| Recherchenort | Abschlußdatum der Recherche | Prüfer |
|---|---|---|
| BERLIN | 13 NOVEMBER 1990 | BERTRAM H.E.H. |

EPO FORM 1503 03.42 (P0403)